# EUROPEAN PATENT APPLICATION

(11) **EP 4 718 664 A1**
(43) Date of publication of application: **01.04.2026**
(21) Application number: 23939132.9
(22) Date of filing: 04.08.2023
(51) Int. Cl.: H02J 7/00, B60L 58/10, B60L 58/27, H02P 27/06

(54) **CHARGING AND DISCHARGING CIRCUIT, BATTERY CONTROL CIRCUIT, AND ELECTRICAL DEVICE**

(30) Priority: 29.05.2023 CN 202321327947 U
(71) Applicant: Contemporary Amperex Technology Co., Limited, Ningde, Fujian 352100 (CN)
(72) Inventor: WU, Kai, Ningde, Fujian 352100 (CN); CHEN, Xing, Ningde, Fujian 352100 (CN); HUANG, Xiaojian, Ningde, Fujian 352100 (CN); LIU, Diping, Ningde, Fujian 352100 (CN); YAN, Yu, Ningde, Fujian 352100 (CN); CHEN, Wei, Ningde, Fujian 352100 (CN)
(74) Representative: Ziebig Hengelhaupt Intellectual Property Attorneys Patentanwaltskanzlei PartGmbB
(86) International application number: PCT/CN2023/111199
(87) International publication number: WO 2024/244152

(57) **Abstract**

The present application discloses a charging and discharging circuit, a battery control circuit and an electrical device. The charging and discharging circuit includes: a power supply module, a first driving assembly, a second driving assembly and a first switch; the power supply module includes a battery, the first driving assembly includes a first motor, and the second driving assembly includes a second motor; the first driving assembly and the second driving assembly are connected in parallel between a positive electrode end and a negative electrode end of the power supply module; and one end of the first switch is connected to a neutral point of the first motor, and the other end of the first switch is connected to a neutral point of the second motor. According to the present application, the first switch is connected between the neutral points of the two motors, different circuit loops are formed by switching by controlling on and off of each switch in the circuit, so that more functions can be supported and achieved. A plurality of inductors can be connected between the neutral points of the two motors in series, and the inductors can be connected in parallel with the switches, so that the inductance in the charging and discharging loop can be flexibly adjusted, and different battery heating requirements are met by adjusting the circuit structure.

## Description

### CROSS-REFERENCE TO RELATED APPLICATIONS

The present application claims priority to Chinese Patent Application (202321327947.4), entitled "CHARGING AND DISCHARGING CIRCUIT, BATTERY CONTROL CIRCUIT AND ELECTRICAL DEVICE" filed on May 29, 2023, which is incorporated by reference in the present application.

### TECHNICAL FIELD

The present application relates to the technical field of new energy transport means, and specifically relates to a charging and discharging circuit, a battery control circuit and an electrical device.

### BACKGROUND

At present, new energy transport means commonly uses a dual-motor framework, which includes two motors, and the electric energy released by a battery is converted into mechanical energy by means of the two motors, so as to drive the new energy transport means to run.

In related technologies, the two motors in the dual-motor framework are connected in parallel, and the circuit connection mode is fixed. A single circuit structure can realize the function of driving the transport means to run by means of the two motors, but cannot be flexibly changed to achieve more functions.

As described above, it is only to provide background information relating to the present application and does not necessarily constitute related technology.

### SUMMARY

In view of the problems in the related technology, the present application provides a charging and discharging circuit, a battery control circuit and an electrical device, which can relieve the problem that a circuit structure of a double-motor framework is single and cannot achieve more functions.

In a first aspect, an embodiment of the present application provides a charging and discharging circuit, which includes: a power supply module, a first driving assembly, a second driving assembly and a first switch; the power supply module includes a battery, the first driving assembly includes a first motor, and the second driving assembly includes a second motor;
the first driving assembly and the second driving assembly are connected in parallel between a positive electrode end and a negative electrode end of the power supply module;
one end of the first switch is connected to a neutral point of the first motor, and the other end of the first switch is connected to a neutral point of the second motor;
the neutral point of the first motor is provided with a first neutral line terminal, and the neutral point of the second motor is provided with a second neutral line terminal; and
one end of the first switch is connected to the first neutral line terminal by means of a high-voltage wire harness, and the other end of the first switch is connected to the second neutral line terminal by means of the high-voltage wire harness.

Neutral lines of the first motor and the second motor are led out, and the first switch is connected between the neutral lines; and a connection relationship between the first motor and the second motor can be switched by means of the first switch to realize switching to form different circuit loops, and therefore, a circuit framework with single battery and double motors can flexibly change the circuit structure to support to realize more different functions. The first neutral line terminal is led out from the neutral point of the first motor, and the second neutral line terminal is led out from the neutral point of the second motor, and therefore, the first switch can be conveniently connected between the neutral point of the first motor and the neutral point of the second motor by means of a conductor. It is not needed to disassemble housings of the first motor and the second motor to find the position of the neutral point during wiring, thereby improving the wiring convenience and the wiring efficiency.

In some embodiments of the present application, the charging and discharging circuit further includes an energy storage element; and
the energy storage element is connected to a line between the neutral point of the first motor and the neutral point of the second motor, and is connected to the first switch in series.

By adding the energy storage element, in a scene of heating a battery, the energy storage element stores electric energy together with windings in the first motor and the second motor, which improves the energy storage capacity of the whole circuit system; then the stored electric energy is recharged to the battery; and charging and discharging are alternately carried out to heat the battery. The energy storage element can increase the magnitude of AC generated in the whole loop, thus the heat production amount of the internal resistance of the battery in unit time is increased, and as a result, the heating rate of the battery is improved.

In some embodiments of the present application, the energy storage element includes at least one inductor; and
the at least one inductor and the first switch are connected in series with a line between the neutral point of the first motor and the neutral point of the second motor.

The at least one inductor is connected in series between the neutral point of the first motor and the neutral point of the second motor; and by means of the inductor connected in series, the total inductance of the inductors in the whole circuit system in the battery heating scene can be increased, which is conducive to increasing the magnitude of the AC generated in the charging and discharging loop, thereby improving the battery heating efficiency.

In some embodiments of the present application, the charging and discharging circuit further includes at least one second switch which is connected in parallel with the at least one inductor.

When the second switch is turned on, equivalently, the inductor is connected to one conductor in parallel, and the inductor is short-circuited, in this case, current flows through the conductor that is connected in parallel with the inductor and does not flow through the inductor. In this way, by controlling the on and off of the second switch, the number of the inductors connected into the circuit loop can be flexibly controlled, thus the total inductance of the inductors in the whole circuit system can be flexibly adjusted, accordingly the circuit loop meeting the control requirement can be formed by switching the switches, the flexibility of the whole circuit framework is improved, and more functions of the whole circuit framework can be realized.

In some embodiments of the present application, the second switches are in one-to-one correspondence with the inductors, and each second switch is connected in parallel with the corresponding inductor.

In the embodiments, each inductor connected in series between the neutral point of the first motor and the neutral point of the second motor is independently connected in parallel with one second switch, and thus the flexibility of adjusting the number of inductors connected into the loop can be further improved.

In a second aspect, an embodiment of the present application provides a battery control circuit, which includes a first positive electrode connector, a second positive electrode connector, a first negative electrode connector and a second negative electrode connector;
a positive electrode line is connected between the first positive electrode connector and the second positive electrode connector, and a negative electrode line is connected between the first negative electrode connector and the second negative electrode connector;
the first positive electrode connector is connected to a positive electrode end of the battery in the charging and discharging circuit, and the first negative electrode connector is connected to a negative electrode end of the battery;
the second positive electrode connector is connected to a first end of the first driving assembly and a first end of the second driving assembly in the charging and discharging circuit; and
the second negative electrode connector is connected to a second end of the first driving assembly and a second end of the second driving assembly.

The first positive electrode connector, the second positive electrode connector, the first negative electrode connector and the second negative electrode connector are arranged in the battery control circuit. A positive electrode and a negative electrode of the battery can be conveniently connected to the battery control circuit by means of conductors, and the first driving assembly and the second driving assembly can be conveniently connected to the battery control circuit, thereby improving the wiring convenience. The connection relationship of the battery relative to the first driving assembly and the second driving assembly can be controlled by means of the battery control circuit, and the battery can be disconnected from other components in time when the circuit is abnormal so that the battery can be protected. The battery control circuit can detect parameters such as the current or voltage of the battery, which is conducive to achieving more accurate circuit control, and whether the circuit is abnormal or not can be determined based on the detected parameters. The battery control circuit is applied to the double-motor framework circuit, and can flexibly switch the connection relationship between the positive electrode and the negative electrode of the battery and other electric appliance components, and therefore more functions can be achieved.

In some embodiments of the present application, a main positive switch and a pre-charge circuit connected in parallel with the main positive switch are arranged on the positive electrode line; and
the main negative switch and the current sensor are arranged on the negative electrode line.

The pre-charge circuit is arranged on the positive electrode line, which reserves more space for the negative electrode line so as to arrange other components or conduct wiring in the reserved space. The main positive switch and the main negative switch can be controlled to connect or disconnect the circuit between the battery and other components, the circuit between the battery and other components can be conveniently disconnected when the circuit fails down, and therefore the battery can be protected. The magnitude of the current flowing through the battery can be detected by means of the current sensor, whether the circuit fails or not can be determined based on detected current, and some control processes can be controlled based on the current.

In some embodiments of the present application, the main positive switch and the current sensor are arranged on the positive electrode line; and
the main negative switch and the pre-charge circuit connected in parallel with the main negative switch are arranged on the negative electrode line.

Such arrangement is conducive to reserving more space for the positive electrode line so as to arrange other components or conduct wiring in the reserved space.

In some embodiments of the present application, the second positive electrode connector includes a first positive electrode sub-connector and a second positive electrode sub-connector; the positive electrode line includes a first positive electrode branch and a second positive electrode branch;
the first positive electrode branch is connected between the first positive electrode sub-connector and the first positive electrode connector, and the second positive electrode branch is connected between the second positive electrode sub-connector and the first positive electrode connector; and
the first positive electrode sub-connector is connected to the first end of the first driving assembly, and the second positive electrode sub-connector is connected to the first end of the second driving assembly.

In the embodiments, the positive electrode line is divided into the first positive electrode branch and the second positive electrode branch, the first positive electrode sub-connector is connected to the first end of the first driving assembly, and the second positive electrode sub-connector is connected to the first end of the second driving assembly. In this way, the first driving assembly and the second driving assembly are connected to different connectors respectively, and it is not needed to bundle the conductor at the first end of the first driving assembly with the conductor at the first end of the second driving assembly so as to be connected to the same connector, thereby improving the convenience of wiring. In addition, the first driving assembly and the second driving assembly can be independently connected to different branches, and in a case that the branch with one driving assembly or one driving assembly fails, the other branch or the other driving assembly can run normally to provide kinetic energy for the electrical device, thereby improving the running reliability of the circuit, as well as improving the fault tolerance performance of the whole circuit framework.

In some embodiments of the present application, the first branch switch is connected to the first positive electrode branch, the pre-charge circuit is connected to the second positive electrode branch and is connected in parallel with the first branch switch; the second branch switch is also connected between the pre-charge circuit on the second positive electrode branch and the second positive electrode sub-connector; and
the main negative switch and the current sensor are arranged on the negative electrode line.

The pre-charge circuit is arranged on the second positive electrode branch, which reserves more space for the negative electrode line so as to arrange other components or conduct wiring in the reserved space. The first branch switch can be controlled to conduct or disconnect the circuit between the battery and the first driving assembly, and the second branch switch can be controlled to conduct or disconnect the circuit between the battery and the second driving assembly; and in a case that the first driving assembly fails, the first branch switch can be controlled to be turned off, thereby protecting the battery. In a case that the second driving assembly fails, the second branch switch can be controlled to be turned off, thereby protecting the battery. Moreover, the first driving assembly and the second driving assembly are independently connected to the positive electrode, so if one driving assembly fails, the other driving assembly cannot be influenced, thus improving the fault tolerance performance of the whole circuit structure.

In some embodiments of the present application, the first branch switch and the current sensor are connected to the first positive electrode branch, and the second branch switch and the current sensor are connected to the second positive electrode branch; and
the main negative switch and the pre-charge circuit connected in parallel with the main negative switch are arranged on the negative electrode line.

The pre-charge circuit is arranged on the negative electrode line, which reserves more space for the positive electrode line so as to arrange other components or conduct wiring in the reserved space. The first branch switch and the second branch switch are arranged, so that the first driving assembly and the second driving assembly are independently connected to the positive electrode; and if one driving assembly fails, the other driving assembly cannot be influenced, thus improving the fault tolerance performance of the whole circuit structure.

In some embodiments of the present application, the second negative electrode connector includes a first negative electrode sub-connector and a second negative electrode sub-connector; the negative electrode line includes a first negative electrode branch and a second negative electrode branch;
the first negative electrode branch is connected between the first negative electrode sub-connector and the first negative electrode connector; the second negative electrode branch is connected between the second negative electrode sub-connector and the first negative electrode connector; and
the first negative electrode sub-connector is connected to the second end of the first driving assembly, and the second negative electrode sub-connector is connected to the second end of the second driving assembly.

In the embodiments, the negative electrode line is divided into the first negative electrode branch and the second negative electrode branch, the first negative electrode sub-connector is connected to the second end of the first driving assembly, and the second negative electrode sub-connector is connected to the second end of the second driving assembly. In this way, the second ends of the first driving assembly and the second driving assembly are connected to different connectors, and it is not needed to bundle the conductor at the second end of the first driving assembly with the conductor at the second end of the second driving assembly so as to be connected to the same connector, thereby improving the convenience of wiring.

In some embodiments of the present application, a third branch switch is connected to the first negative electrode branch, and the pre-charge circuit is connected to the second negative electrode branch and is connected to the third branch switch in parallel; and
the positive electrode line is provided with the main positive switch and the current sensor.

The pre-charge circuit is arranged on the second negative electrode branch, which reserves more space for the positive electrode line so as to arrange other components or conduct wiring in the reserved space. The third branch switch can be controlled to conduct or disconnect the circuit between the battery and the first driving assembly, the fourth branch switch can be controlled to conduct or disconnect the circuit between the battery and the second driving assembly; and in a case that the first driving assembly fails, the third branch switch can be controlled to be turned off, thereby protecting the battery. In a case that the second driving assembly fails, the fourth branch switch can be controlled to be turned off, thereby protecting the battery. Moreover, the first driving assembly and the second driving assembly are independently connected to the negative electrode, so if one driving assembly fails, the other driving assembly cannot be influenced, thus improving the fault tolerance performance of the whole circuit structure.

In some embodiments of the present application, the third branch switch and the current sensor are connected to the first negative electrode branch, and the fourth branch switch and the current sensor are connected to the second negative electrode branch; and
the positive electrode line is provided with the main positive switch and the pre-charge circuit connected in parallel with the main positive switch.

Such arrangement is conducive to reserving more space for the negative electrode line so as to arrange other components or arrange wires in the reserved space. The third branch switch and the fourth branch switch are arranged, so that the first driving assembly and the second driving assembly are independently connected to the positive electrode; and if one driving assembly fails, the other driving assembly cannot be influenced, thus improving the fault tolerance performance of the whole circuit structure.

In some embodiments of the present application, the second positive electrode connector includes the first positive electrode sub-connector and the second positive electrode sub-connector; the second negative electrode connector includes the first negative electrode sub-connector and the second negative electrode sub-connector;
the first positive electrode branch is connected between the first positive electrode sub-connector and the first positive electrode connector, and the second positive electrode branch is connected between the second positive electrode sub-connector and the first positive electrode connector;
the first negative electrode branch is connected between the first negative electrode sub-connector and the first negative electrode connector, and the second negative electrode branch is connected between the second negative electrode sub-connector and the first negative electrode connector;
the first positive electrode sub-connector is connected to the first end of the first driving assembly, and the second positive electrode sub-connector is connected to the first end of the second driving assembly; and
the first negative electrode sub-connector is connected to the second end of the first driving assembly, and the second negative electrode sub-connector is connected to the second end of the second driving assembly.

In the embodiments, the battery control circuit is provided with six connectors in total, including the first positive electrode connector, the first positive electrode sub-connector, the second positive electrode sub-connector, the first negative electrode connector, the first negative electrode sub-connector and the second negative electrode sub-connector. The first driving assembly is connected to the battery control circuit by means of the first positive electrode sub-connector and the first negative electrode sub-connector so as to be connected to the battery. The second driving assembly is connected to the battery control circuit by means of the second positive electrode sub-connector and the second negative electrode sub-connector so as to be connected to the battery. In such connection structure, the first driving assembly and the second driving assembly are equivalently connected to the battery by means of mutually independent circuits. On one hand, the arrangement and connection of the lines in the circuit are in order. On the other hand, if one branch fails, the other branch is not influenced, so that the usability of the electrical device can still be maintained in a case that a certain branch fails, and the fault tolerance of the circuit framework is improved.

In some embodiments of the present application, the first branch switch is connected to the first positive electrode branch, and the pre-charge circuit is connected to the second positive electrode branch and is connected in parallel with the first branch switch; and
the third branch switch and the current sensor are connected to the first negative electrode branch, and the fourth branch switch and the current sensor are connected to the second negative electrode branch.

In the embodiments, the pre-charge circuit is arranged on the second positive electrode branch, which reserves more space for the negative electrode line so as to arrange other components or conduct wiring in the reserved space. The first branch switch or the third branch switch can be controlled to conduct or disconnect the circuit between the battery and the first driving assembly, the second branch switch or the fourth branch switch can be controlled to conduct or disconnect the circuit between the battery and the second driving assembly. In a case that the first driving assembly fails, the first branch switch and/or the third branch switch can be controlled to be turned off, thereby protecting the battery. In a case that the second driving assembly fails, the second branch switch and/or the fourth branch switch can be controlled to be turned off, thereby protecting the battery. The current sensor on the first negative electrode branch can detect the magnitude of the current in the circuit branch with the first driving assembly, and the detected magnitude of the current helps to determine whether the circuit branch with the first driving assembly fails. The current sensor on the second negative electrode branch can detect the magnitude of the current in the circuit branch with the second driving assembly, and the detected magnitude of the current helps to determine whether the circuit branch with the second driving assembly fails.

In some embodiments of the present application, the first branch switch and the current sensor are connected to the first positive electrode branch, and the second branch switch and the current sensor are connected to the second positive electrode branch; and
the third branch switch is connected to the first negative electrode branch, and the pre-charge circuit is connected to the second negative electrode branch and is connected in parallel with the third branch switch.

In the embodiments, the pre-charge circuit is arranged on the second negative electrode branch, which reserves more space for the positive electrode line so as to arrange other components or conduct wiring in the reserved space. By means of the circuit structure, the connection relationship of the first driving assembly and the second driving assembly relative to the battery can be conveniently controlled. In a case that the first driving assembly and/or the second driving assembly fail/fails, the connection relationship between the battery and the failed component can be disconnected by switch control, thereby protecting the battery.

In a third aspect, an embodiment of the present application provides an electrical device, which includes a control apparatus, the charging and discharging circuit in the first aspect, and the battery control circuit in the second aspect;
the charging and discharging circuit is connected to the battery control circuit; and
the control apparatus is in communication connection with the charging and discharging circuit and a switch element in the battery control circuit, and the switch element comprises at least the first switch in the charging and discharging circuit.

The above description is only an overview of the technical solution of the embodiment of the present application, and in order to understand more clearly the technical means of the embodiment of the present application, it can be implemented in accordance with the contents of the description, and in order to make the above and other purposes, characteristics and advantages of the embodiment of the present application more obvious and easy to understand, the specific embodiments of the present application are listed below.

### BRIEF DESCRIPTION OF THE DRAWINGS

By reading the detailed description of the following embodiments, various other advantages and benefits will become clear to those with ordinary skill in the art. The accompanying drawings are used only for the purpose of illustrating the embodiments of the present application and are not considered to be a limitation on the present application. In addition, in all accompanying drawings, the same annex number is used to indicate the same component.
FIG. 1 is a schematic structural diagram of a vehicle according to one or more embodiments.
FIG. 2 is a schematic structural diagram of a charging and discharging circuit according to one or more embodiments.
FIG. 3 is a schematic structural diagram of a charging and discharging circuit according to one or more embodiments.
FIG. 4 is a schematic structural diagram of a local circuit between a first motor and a second motor according to one or more embodiments.
FIG. 5 is a schematic structural diagram of a local circuit between a first motor and a second motor according to one or more embodiments.
FIG. 6 is a schematic structural diagram of a local circuit between a first motor and a second motor according to one or more embodiments.
FIG. 7 is a schematic structural diagram of circuit connection between a charging and discharging circuit and a battery control circuit according to one or more embodiments.
FIG. 8 is a schematic structural diagram of a battery control circuit according to one or more embodiments.
FIG. 9 is a schematic structural diagram of a battery control circuit according to one or more embodiments.
FIG. 10 is a schematic structural diagram of circuit connection between a charging and discharging circuit and a battery control circuit according to one or more embodiments.
FIG. 11 is a schematic structural diagram of circuit connection between a charging and discharging circuit and a battery control circuit according to one or more embodiments.
FIG. 12 is a schematic structural diagram of circuit connection between a charging and discharging circuit and a battery control circuit according to one or more embodiments.
FIG. 13 is a schematic structural diagram of circuit connection between a charging and discharging circuit and a battery control circuit according to one or more embodiments.
FIG. 14 is a schematic structural diagram of circuit connection between a charging and discharging circuit and a battery control circuit according to one or more embodiments.
FIG. 15 is a schematic structural diagram of circuit connection between a charging and discharging circuit and a battery control circuit according to one or more embodiments.
FIG. 16 is a schematic structural diagram of circuit connection between a charging and discharging circuit and a battery control circuit according to one or more embodiments.
FIG. 17 is a schematic structural diagram of an electrical device according to one or more embodiments.

The meaning of the reference numerals in the above drawings are:
1000: vehicle; 100: battery; 200: controller; 300: motor; 400: charging and discharging circuit;
1: power supply module; 2: first driving assembly; 3: second driving assembly; 4: first switch; 5: first neutral line terminal; 6: second neutral line terminal; 7: energy storage element; 8: second switch; 9: battery control circuit; 10: positive electrode line; 11: negative electrode line; 12: main positive switch; 13: pre-charge circuit; 14: main negative switch; 15: current sensor; 16: first branch switch; 17: second branch switch; 18: third branch switch; 19: fourth branch switch; 20: control apparatus;
21: first motor; 22: first motor controller; 31: second motor; 32: second motor controller; 91: first positive electrode connector; 92: second positive electrode connector; 93: first negative electrode connector; 94: second negative electrode connector;
921: first positive electrode sub-connector; 922: second positive electrode sub-connector; 941: first negative electrode sub-connector; 942: second negative electrode sub-connector; 101: first positive electrode branch; 102: second positive electrode branch; 111: first negative electrode branch; and 112: second negative electrode branch.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meaning of the above terms in the present application may be understood on a case-by-case basis.

At present, dual-motor driven electrical devices are widely used, such as electric vehicles, ships or spacecraft with dual motors. In these devices, batteries are used for supplying power, and two motors convert the electric energy of the batteries into mechanical energy to drive the devices to run.

With respect to single-cell dual-motor circuit frameworks in related technologies, although dual-motor driving makes the performance of electrical device better, the structure of the circuit framework is single, and different circuit circuits cannot be switched, consequently, more functions cannot be realized.

Based on this, an embodiment of the present application provides a charging and discharging circuit, which includes a power supply module, a first driving assembly, a second driving assembly and a first switch. The power supply module includes a battery, the first driving assembly includes a first motor, and the second driving assembly includes a second motor. The first driving assembly and the second driving assembly are connected in parallel between a positive electrode end and a negative electrode end of the power supply module. One end of the first switch is connected to a neutral point of the first motor, and the other end of the first switch is connected to a neutral point of the second motor.

Neutral lines of the first motor and the second motor are led out, and the first switch is connected between the neutral lines; and a connection relationship between the first motor and the second motor can be switched by means of the first switch to realize switching to form different circuit loops, and therefore, a circuit framework with single battery and double motors can flexibly change the circuit structure to support to realize more different functions.

In this embodiment of the present application, the battery can include a battery cell, a battery module or a battery pack and the like; and in this embodiment of the present application, the scale of the battery is not limited. The battery can be a power battery such as a lithium battery, a lead-acid battery, a nickel-cadmium battery and a sodium-sulfur battery.

The charging and discharging circuit provided in this embodiment of the present application can implement different functions based on flexible switching of the circuit structure, for example, in a case that the first switch is turned off, the conversion of electric energy to mechanical energy is realized by means of the formed circuit loop, and thus an electrical device with the charging and discharging circuit can be driven to run. For another example, in a case that the first switch is turned off, charging and discharging between the battery and windings of the two motors are realized by means of the formed circuit loop, thus AC is generated in the loop, which heats an internal resistor of the battery so as to achieve the effect of heating the battery. In a case of the first switch is turned off, different switch tubes in the motor controllers corresponding to the two motors can be controlled to be connected or disconnected to switch more different circuit circuits, thereby achieving more different functions.

An embodiment of the present application also provides an electrical device using the above-mentioned charging and discharging circuit, and the electrical device may be but not limited to electric toys, electric tools, battery cars, electric vehicles, ships, spacecraft, etc. The electrical device is equipped with the charging and discharging circuit disclosed by the present application, the first switch and each switch tube in the motor controllers can be controlled to be connected and disconnected as required, so that the charging and discharging circuit can be flexibly switched to form different circuit circuits so as to achieve different functions.

The following embodiment, for the convenience of illustration, takes an electrical device in one embodiment of the present application being a vehicle 1000 as an example.

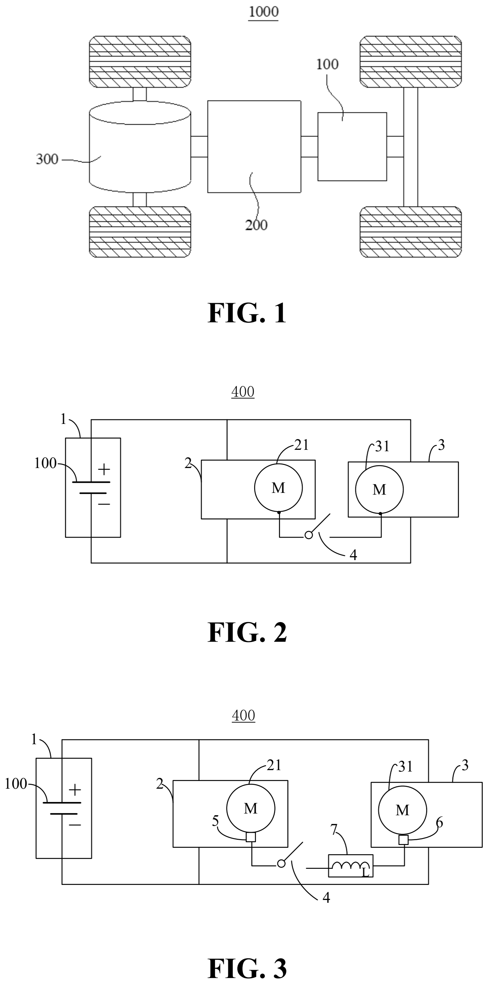

FIG. 1 is referred, and FIG. 1 is a schematic structural diagram of a vehicle 1000 provided by some embodiments of the present application. The vehicle 1000 can be a new energy automobile, and the new energy automobile can be a pure electric automobile or an extended range automobile and the like. A battery 100 is arranged in the vehicle 1000, and the battery 100 can be arranged at the bottom or head or tail of the vehicle 1000. The battery 100 can be configured to supply power to the vehicle 1000, for example, the battery 100 can be used as an operation power supply of the vehicle 1000. The vehicle 1000 can further include a controller 200 and a motor 300, and the controller 200 is configured to control the battery 100 to supply power to the motor 300, for example, the controller 200 is configured to meet the working power consumption requirements during starting, navigation and running of the vehicle 1000.

The battery 100 can further be used as a driving power supply of the vehicle 1000 to provide driving power for the vehicle 1000. The motor 300 is configured to convert electric energy outputted by the battery 100 into mechanical energy so as to drive the vehicle 1000 to run.

In practical application, one or two or motors 300 can be provided. The charging and discharging circuit provided in this embodiment of the present application is suitable for a situation that the vehicle 1000 is provided with one battery 100 and two motors 300.

FIG. 2 is referred, which is schematic structural diagram of a charging and discharging circuit provided by some embodiments of the present application; and as shown in FIG. 2, the charging and discharging circuit 400 includes a power supply module 1, a first driving assembly 2, a second driving assembly 3 and a first switch 4.

The power supply module 1 includes the battery 100, the first driving assembly 2 includes a first motor 21, and the second driving assembly 3 includes a second motor 31. The first driving assembly 2 and the second driving assembly 3 are connected in parallel between a positive electrode end and a negative electrode end of the power supply module 1. One end of the first switch 4 is connected to a neutral point of the first motor 21, and the other end of the first switch 4 is connected to a neutral point of the second motor 31.

The power supply module 1 is configured to supply power to other components in the charging and discharging circuit 400 and can also be configured to supply power to other components needing power on the electrical device with the charging and discharging circuit 400. The battery 100 in the power supply module 1 can be a battery cell, a battery module or a battery pack and the like. The battery 100 in the power supply module 1 can be one battery, and can also be a large-scale battery pack which is formed by connecting a plurality of batteries in series and/or in parallel.

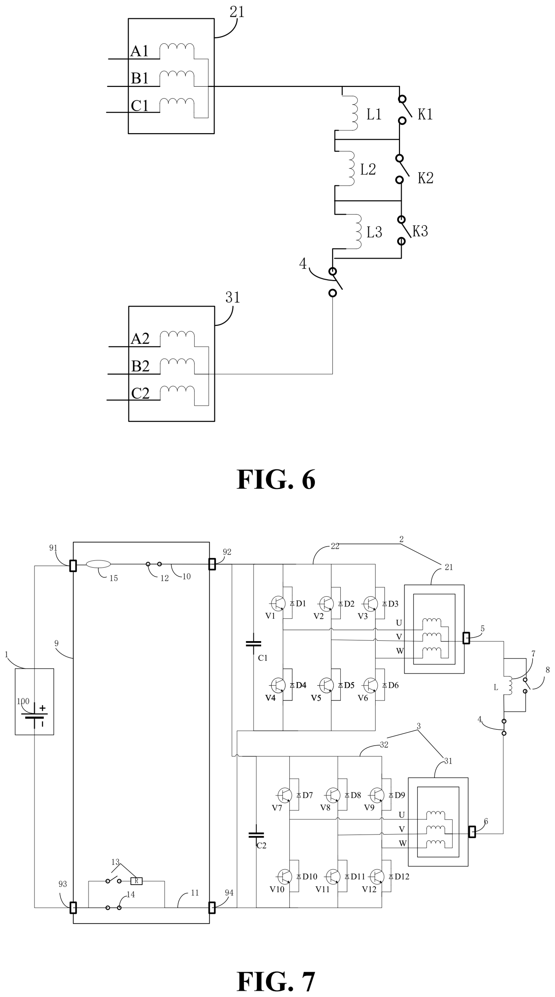

The first driving assembly 2 and the second driving assembly 3 are energy conversion modules and are configured to convert electric energy outputted by the battery into mechanical energy. The first driving assembly 2 includes the first motor 21 and can also include a first motor controller 22 that is connected to the first motor 21. The second driving assembly 3 includes the second motor 31 and can also include a second motor controller 32 that is connected to the second motor 31. The motor controllers are configured to convert DC outputted by the battery into AC for the motors, and the motors are configured to convert the electric energy of the inputted AC into mechanical energy. The first motor controller 22 and the second motor controller 32 are not drawn in FIG. 1, and the first motor controller 22 and the second motor controller 32 are marked in FIG. 7.

The first motor 21 and the second motor 31 can be motors with any phase number, such as a three-phase motor, a four-phase motor, and a six-phase motor. The phase number of the first motor 21 and the phase number of the second motor 31 can be equal or unequal. Both the first motor controller 22 and the second motor 31 include a plurality of bridge arms, the number of the bridge arms in the first motor controller 22 is equal to the phase number of the first motor 21, and the number of the bridge arms in the second motor controller 32 is equal to the phase number of the second motor 31. Each bridge arm includes an upper bridge arm and a lower bridge arm, each bridge arm in the first motor controller 22 is connected to each phase of winding in the first motor 21 in an one-to-one correspondence mode, and a connection point of the upper bridge arm and the lower bridge arm in each bridge arm is connected to the corresponding phase of winding in the first motor 21. The connecting mode of the bridge arms in the second motor controller 32 is the same as that of the windings in the second motor 31, which will not be listed. The upper bridge arm and the lower bridge arm in each bridge arm are respectively provided with a switch tube which can be an IGBT (Insulated Gate Bipolar transistor) tube.

The first switch 4 can be a relay or an IGBT tube and the like, and in this embodiment of the present application, specific devices selected for the first switch 4 are not limited, and devices that can realize the function of conducting or disconnecting the circuit, and can automatically controlled to be turned on and off by signals can be used as the first switch 4.

In the charging and discharging circuit 400 provided in this embodiment of the present application, the first motor 21 and the first motor controller 22 are connected to form the first driving assembly 2, and the second motor 31 and the second motor controller 32 are connected to form the second driving assembly 3. The first driving assembly 2 and the second driving assembly 3 are connected in parallel between a positive electrode and a negative electrode of the power supply module 1. Therefore, the battery 100 in the power supply module 1 can supply power to the first motor 21 and the second motor 31 respectively, the first motor 21 and the second motor 31 convert electric energy outputted by the battery 100 into mechanical energy respectively, thereby providing driving power for the electrical device with the charging and discharging circuit 400 by means of the first motor 21 and the second motor 31.

In the charging and discharging circuit 400, the first switch 4 is connected between the neutral point of the first motor 21 and the neutral point of the second motor 31. The neutral points of the motors are connection points of all windings in the motors, and the first switch 4 is connected between the neutral point of the first motor 21 and the neutral point of the second motor 31. When the first switch 4 is turned off, a circuit loop in which two ends of the power supply module 1 are connected in parallel with the first driving assembly 2 and the second driving assembly 3 is formed; by means of the circuit structure, the power supply module 1 supplies power to the first driving assembly 2 and the second driving assembly 3, and the first motor 21 in the first driving assembly 2 and the second motor 31 in the second driving assembly 3 convert the electric energy outputted by the battery 100 into mechanical energy, thus realizing the function of driving the electrical device to run.

When the first switch 4 is turned on, a circuit loop in which the power supply module 1, the first driving assembly 2 and the second driving assembly 3 are connected in series is formed. By means of the circuit structure, the battery 100 in the power supply module 1 and the windings in the first motor 21 and the second motor 31 can be alternately charged and discharged, and AC is generated in the circuit loop, which heats the internal resistor of the battery, thus achieving the effect of heating the battery.

When the first switch 4 is turned on, by controlling on and off of different bridge arms in the first motor controller 22 and controlling on and off of different bridge arms in the second motor controller 32, the number of the windings of the motors connected into the circuit loop can be adjusted, so that more diversified circuit structure changes are achieved, and further, more functions are achieved to meet control requirements of the electrical device in different aspects.

The first switch 4 is connected between the neutral point of the first motor 21 and the neutral point of the second motor 31; a connection relationship between the first motor 21 and the second motor 31 can be switched by means of the first switch 4 to realize switching to form different circuit loops, and therefore, the circuit framework can flexibly change the circuit structure to support to realize more different functions.

In some embodiments of the present application, in a schematic diagram of the charging and discharging circuit 400 shown in FIG. 3, a first neutral line terminal 5 is arranged at the neutral point of the first motor 21, and a second neutral line terminal 6 is arranged at the neutral point of the second motor 31. One end of the first switch 4 is connected to the first neutral line terminal 5 by means of a high-voltage wire harness, and the other end of the first switch 4 is connected to the second neutral line terminal 6 by means of a high-voltage wire harness.

The first neutral line terminal 5 is led out from the neutral point of the first motor 21, and the second neutral line terminal 6 is led out from the neutral point of the second motor 31, which is conducive to connecting the first switch 4 between the neutral point of the first motor 21 and the neutral point of the second motor 31 by means of conductors. During wiring, it is not needed to disassemble housings of the first motor 21 and the second motor 31 to find the position of the neutral point during wiring, thereby improving the wiring convenience and the wiring efficiency.

On the basis of each embodiment of the present application, as shown in FIG. 3, the charging and discharging circuit 400 further includes an energy storage element 7, and the energy storage element 7 is connected to a line between the neutral point of the first motor 21 and the neutral point of the second motor 31 and is connected in series with the first switch 4.

The energy storage element 7 is configured to store electric energy, and in a scene that the first switch 4 is turned off to form a charging and discharging loop for heating the battery 100, the energy storage element 7 stores the electric energy together with windings in the first motor 21 and the second motor 31 in the discharging process of the battery 100. In the charging process of the battery 100, the energy storage element 7 charges the battery 100 together with the windings in the first motor 21 and the second motor 31.

By adding the energy storage element 7, in a scene of heating the battery 100, the energy storage element 7 stores the electric energy together with windings in the first motor 21 and the second motor 31, which improves the energy storage capacity of the whole circuit system; then the stored electric energy is recharged to the battery 100; and charging and discharging are alternately carried out to heat the battery 100. The energy storage element 7 can increase the magnitude of AC generated in the whole loop, thus the heat production amount of the internal resistor of the battery in unit time is increased, and as a result, the heating rate of the battery is improved.

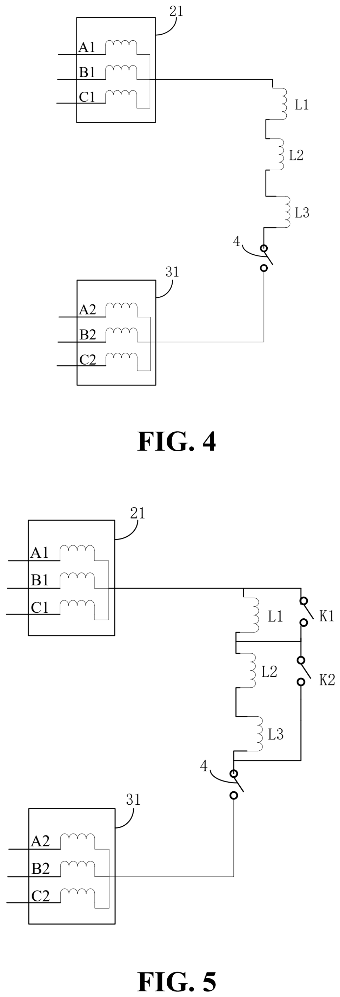

In some embodiments of the present application, as shown in FIG. 3, the energy storage element 7 includes at least one inductor L. The at least one inductor L and the first switch 4 are connected in series on a line between the neutral point of the first motor 21 and the neutral point of the second motor 31. One inductor L is illustrated in FIG. 3. FIG. 4 is a schematic diagram of a local circuit of a connecting structure between the first motor 21 and the second motor 31; in FIG. 4, the first motor 21 and the second motor 31 are both shown as three-phase motors, the first motor 21 includes three windings A1, B1 and C1, and the second motor 31 includes three windings A2, B2 and C2. In FIG. 4, three inductors L1, L2 and L3 are connected in series between the neutral point of the first motor 21 and the neutral point of the second motor 31. In the embodiments of the present application, the number of the inductors connected in series is not limited.

At least one inductor is connected in series between the neutral points of the first motor 21 and the second motor 31; and by means of the inductor connected in series, the total inductance of the inductors in the whole circuit system in the battery heating scene can be increased, which is conducive to increasing the magnitude of the AC generated in the charging and discharging loop, and improving the battery heating efficiency.

In some other embodiments of the present application, the charging and discharging circuit 400 also includes at least one second switch 8 which is connected in parallel with the at least one inductor L. The number of the second switches 8 can be less than or equal to that of the at least one inductor L. The second switches 8 are switches that can be automatically controlled to be on and off by means of signals, such as relays or IGBT tubes.

In FIG. 5, two second switches K1 and K2 are illustrated, in which, the K1 is connected in parallel with the inductor L1, and the K2 is connected in parallel with a series branch of the inductors L2 and L3. In the embodiments of the present application, the number of the second switches 8 and the specific parallel connection relationship between the second switches 8 and each inductor are not limited.

When the first switches 4 are turned on, current will flow through the line between the neutral point of the first motor 21 and the neutral point of the second motor 31. The second switches 8 are connected in parallel with the inductors L on the line, and the current will flow into the inductors L when the second switches 8 are off. When the second switches 8 is turned on, equivalently, the inductors L are connected in parallel with one conductor, and the inductors L are short-circuited; and in this case, current flows through the conductor that is connected in parallel with the inductors L and does not flow through the inductors L. In this way, by controlling the on and off of the second switches 8, the number of the inductors L connected into the circuit can be flexibly controlled, thus the total inductance of the inductors L in the whole circuit system can be flexibly adjusted, the circuit loop meeting the control requirement is formed by switching the switch; and therefore, the flexibility of the whole circuit framework is improved, and more functions can be realized by the whole circuit framework.

In some embodiments of the present application, the second switches 8 connected between the neutral point of the first motor 21 and the neutral point of the second motor 31 can be in one-to-one correspondence with the inductors L, and each second switch 8 is connected in parallel with the corresponding inductor L. As shown in FIG. 6, three second switches K1, K2 and K3 are illustrated, in which, the K1 is connected in parallel with the inductor L1, the K2 is connected in parallel with the inductor L2, and the K3 is connected in parallel with the inductor L3.

In the embodiments, each inductor L connected in series between the neutral point of the first motor 21 and the neutral point of the second motor 31 is independently connected in parallel with one second switch 8, so that the flexibility of adjusting the number of the inductors connected to the loop can be further improved.

In the embodiment of the present application, neutral lines of the first motor 21 and the second motor 31 are led out, the first switch 4 is connected between neutral points of the first motor 21 and the second motor 31, the connection relationship between the first motor 21 and the second motor 31 can be switched by means of the first switch 4, therefore, different circuit loops can be formed by switching, and the circuit structure can be flexibly changed to support and realize more different functions. A plurality of inductors can be connected between the neutral points of the two motors in series, and the inductors can be connected in parallel with the switches, so that the inductance in the charging and discharging loop can be flexibly adjusted, and different battery heating requirements are met by adjusting the circuit structure.

The above descriptions of the various embodiments tend to emphasize the differences between the various embodiments, and their similarities or similarities can be cross-referenced, and for the sake of brevity, they will not be repeated in this article.

Some embodiments of the present application also provide a battery control circuit. FIG. 7 is a schematic structural diagram of connection between a battery control circuit 9 and the charging and discharging circuit 400, and as shown in FIG. 7, the battery control circuit 9 includes a first positive electrode connector 91, a second positive electrode connector 92, a first negative electrode connector 93 and a second negative electrode connector 94. A positive electrode line 10 is connected between the first positive electrode connector 91 and the second positive electrode connector 92, and a negative electrode line 11 is connected between the first negative electrode connector 93 and the second negative electrode connector 94.

The first positive electrode connector 91 is connected to a positive electrode end of the battery 100 in the charging and discharging circuit 400 in each embodiment above, and the first negative electrode connector 93 is connected to a negative electrode end of the battery 100. The second positive electrode connector 92 is connected to a first end of the first driving assembly 2 and a first end of the second driving assembly 3 in the charging and discharging circuit 400 respectively. The second negative electrode connector 94 is connected to a second end of the first driving assembly 2 and a second end of the second driving assembly 3 respectively.

The first end of the first driving assembly 2 is the end connected to the positive electrode of the battery 100, and the second end of the first driving assembly 2 is the end connected to the negative electrode of the battery 100. The first driving assembly 2 includes a first motor controller 22, the upper bridge arm of each bridge arm of the first motor controller 22 is connected to the same conductor, and the conductor can serve as the first end of the first driving assembly 2. The lower bridge arm of each bridge arm of the first motor controller 22 is connected to the same conductor, and the conductor can serve as the second end of the first driving assembly 2. The first end of the second driving assembly 3 is the end connected to the positive electrode of the battery 100, and the second end of the second driving assembly 3 is the end connected to the negative electrode of the battery 100. The second driving assembly 3 includes a second motor controller 32, the upper bridge arm of each bridge arm of the second motor controller 32 is connected to the same conductor, and the conductor can serve as the first end of the second driving assembly 3. The lower bridge arm of each bridge arm of the second motor controller 32 is connected to the same conductor, and the conductor can serve as the second end of the second driving assembly 3.

In FIG. 7, the first motor controller 22 in the first driving assembly 2 is provided with three bridge arms, and the first motor 21 is provided with three windings. The second motor controller 32 in the second driving assembly 3 is provided with three bridge arms, and the second motor 31 is provided with three windings. In practical application, the two motors can be motors of any phase number, and the number of the bridge arms in the corresponding motor controller can also be a different number.

The battery control circuit 9 is configured to control the battery 100 to be connected to the first driving assembly 2 and the second driving assembly 3, for example, controlling the battery 100 to be in communication with the first driving assembly 2, or controlling the battery 100 to be disconnected from the first driving assembly 2, and controlling the battery 100 to be in communication with the second driving assembly 3, or controlling the battery 100 to be disconnected from the second driving assembly 3. The battery control circuit 9 can also be configured to detect the magnitude of current flowing through the positive electrode line 10 or the negative electrode line 11, or detect the magnitude of voltage of the positive electrode end and the negative electrode end of the battery 100.

Specifically, the first end of the first motor controller 22 in the first driving assembly 2 is connected to the second positive electrode connector 92, and the second end of the first motor controller 22 is connected to the second negative electrode connector 94. The upper bridge arms of all the bridge arm in the first motor controller 22 are connected in a collinear mode, and all the upper bridge arms are connected integrally and are connected to the second positive electrode connector 92. The lower bridge arms of all the bridge arms are connected in a collinear mode, and all the lower bridge arms are connected integrally and are connected to the second negative electrode connector 94.

The first end of the second motor controller 32 in the second driving assembly 3 is connected to the second positive electrode connector 92, and the second end of the second motor controller 32 is connected to the second negative electrode connector 94. The upper bridge arms of all the bridge arms in the second motor controller 32 are connected in a collinear mode, and all the upper bridge arms are connected integrally and are connected to the second positive electrode connector 92. The lower bridge arms of all the bridge arms are connected in a collinear mode, and all the lower bridge arms are connected integrally and are connected to the second negative electrode connector 94.

The first positive electrode connector 91, the second positive electrode connector 92, the first negative electrode connector 93 and the second negative electrode connector 94 are arranged in the battery control circuit 9. The positive electrode and the negative electrode of the battery 100 can be conveniently connected to the battery control circuit 9 by means of the conductors, and the first driving assembly 2 and the second driving assembly 3 can be conveniently connected to the battery control circuit 9, and therefore wiring convenience is improved. The connection relationship of the battery 100 relative to the first driving assembly 2 and the second driving assembly 3 can be controlled by means of the battery control circuit 9, the battery 100 can be disconnected from other components in time when the circuit is abnormal, and therefore the effect of protecting the battery 100 is achieved. The battery control circuit 9 can detect the current or voltage and other parameters of the battery 100, which is conducive to realizing more accurate circuit control, and whether the circuit is abnormal or not can be determined based on the detected parameters. The battery control circuit 9 is applied to a dual-motor framework circuit, and can flexibly switch the connection relationship between the positive electrode and the negative electrode of the battery 100 and other electrical components, and therefore more functions can be achieved.

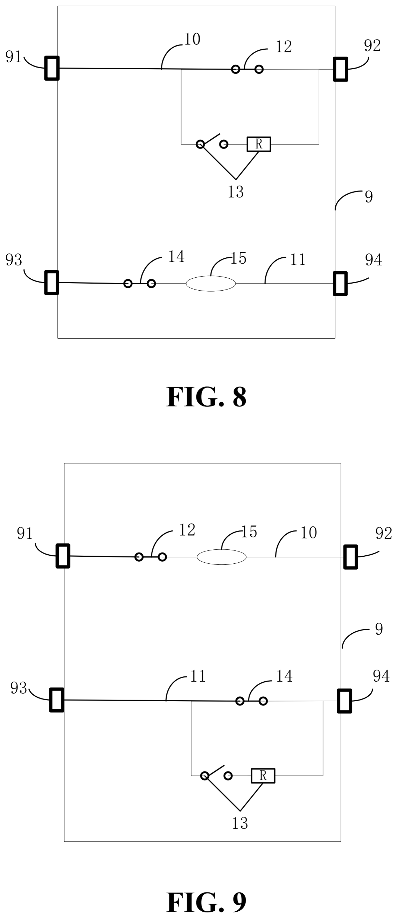

In some embodiments of the present application, the positive electrode line 10 is provided with a main positive switch 12 and a pre-charge circuit 13 connected in parallel with the main positive switch 12, and the negative electrode line 11 is provided with a main negative switch 14 and a current sensor 15, as shown in a schematic diagram of the battery control circuit 9 in FIG. 8.

The main positive switch 12 can be a switch that is controlled to be turned on and turned off through signals, for example, the main positive switch 12 can be a relay or an IGBT tube, and the main positive switch 12 shown in FIG. 8 is in an on state. The pre-charge circuit 13 includes a pre-charge switch and a resistor R which are connected in series, and the pre-charge switch can also be a switch that can be controlled to be turned on and turned off through signals, for example, the pre-charge switch can be a relay or an IGBT tube. The pre-charge circuit 13 can be configured to protect the main positive switch 12 and the main negative switch 14 at the moment that the main positive switch 12 and the main negative switch 14 are turned on and the battery 100 is connected to the circuit, thereby reducing damage caused by overcurrent and overheat in the main positive switch 12 and the main negative switch 14.

As shown in FIG. 7, the first motor controller 22 in the first driving assembly 2 is provided with a capacitor C1 which is connected in parallel with each bridge arm, and the second motor controller 32 in the second driving assembly 3 is provided with a capacitor C2 which is connected in parallel with each bridge arm. The pre-charge circuit 13 can also be configured to protect the capacitors C1 and C2 in a case of overvoltage and overcurrent operation of the circuit, thereby reducing the damage to the capacitors C1 and C2. The current sensor 15 arranged on the negative electrode line 11 is configured to detect the magnitude of current flowing through the battery 100.

The pre-charge circuit 13 is arranged on the positive electrode line 10, which reserves more space for the negative electrode line 11 so as to arrange other components or conduct wiring in the reserved space. The main positive switch 12 and the main negative switch 14 can be controlled to conduct or disconnect the circuit between the battery 100 and other components, the circuit between the battery 100 and other components can be conveniently disconnected when the circuit fails, and therefore the battery 100 can be protected. The magnitude of the current flowing through the battery 100 can be detected by means of the current sensor 15, whether the circuit fails or not can be determined based on detected current, and some control processes can be controlled based on the current.

In some other embodiments of the present application, as shown in FIG. 9, the main positive switch 12 and the current sensor 15 are arranged on the positive electrode line 10. The main negative switch 14 and the pre-charge circuit 13 connected in parallel with the main negative switch 14 are arranged on the negative electrode line 11. In FIG. 9, the main positive switch 12 and the main negative switch 14 are both in the on state.

The structure shown in FIG. 9 is different from the structure shown in FIG. 8 in that the pre-charge circuit 13 is arranged on the negative electrode line 11 and the current sensor 15 is arranged on the positive electrode line 10. For the two implementation modes, whether the pre-charge circuit 13 is arranged on the positive electrode line 10 or the negative electrode line 11 can be determined according to the actual wiring demand of a product in practical application. Such arrangement is conducive to reserving more space for the positive electrode line 10 so as to arrange other components or wire in the reserved space.

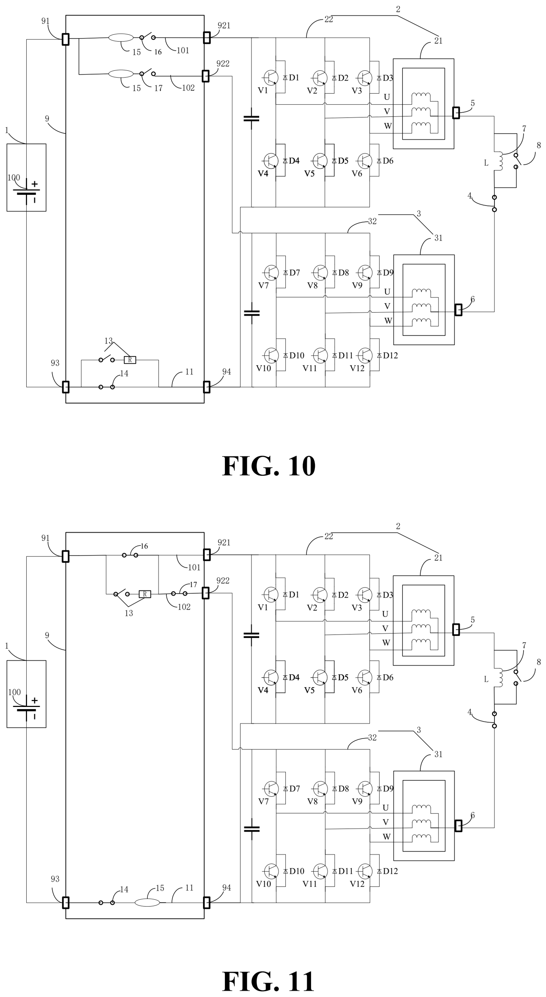

In some embodiments of the present application, in a schematic structural diagram of connection between the charging and discharging circuit 400 and the battery control circuit 9 in FIG. 10, the second positive electrode connector 92 includes a first positive electrode sub-connector 921 and a second positive electrode sub-connector 922; and the positive electrode line 10 includes a first positive electrode branch 101 and a second positive electrode branch 102. The first positive electrode branch 101 is connected between the first positive electrode sub-connector 921 and the first positive electrode connector 91, and the second positive electrode branch 102 is connected between the second positive electrode sub-connector 922 and the first positive electrode connector 91. The first positive electrode sub-connector 921 is connected to the first end of the first driving assembly 2, and the second positive electrode sub-connector is connected to the first end of the second driving assembly 3.

According to the embodiments, the positive electrode line 10 is divided into the first positive electrode branch 101 and the second positive electrode branch 102, the first positive electrode sub-connector 921 is connected to the first end of the first driving assembly 2, and the second positive electrode sub-connector 922 is connected to the first end of the second driving assembly 3. In this way, the first driving assembly 2 and the second driving assembly 3 are connected to different connectors respectively, and it is not needed to bundle the conductor of the first end of the first driving assembly 2 with the conductor of the first end of the second driving assembly 3 so as to be connected to the same connector, thereby improving the convenience of wiring. In addition, the first driving assembly 2 and the second driving assembly 3 can be independently connected to different branches, and in a case that the branch with one driving assembly or one driving assembly fails, the other branch or the other driving assembly can run normally to provide kinetic energy for the electrical device, thereby improving the running reliability of the circuit, as well as improving the fault tolerance performance of the whole circuit framework.

Under the condition that the battery control circuit 9 includes the first positive electrode connector 91, the first positive electrode sub-connector 921, the second positive electrode sub-connector 922, the first negative electrode connector 93 and the second negative electrode connector 94, in some embodiments, as shown in FIG. 10, the first branch switch 16 and the current sensor 15 are connected to the first positive electrode branch 101, and the second branch switch 17 and the current sensor 15 are connected to the second positive electrode branch 102. The main negative switch 14 and the pre-charge circuit 13 connected in parallel with the main negative switch 14 are arranged on the negative electrode line 11.

The pre-charge circuit is arranged on the negative electrode line 11, which reserves more space for the positive electrode line 10 so as to arrange other components or conduct wiring in the reserved space. The first branch switch 16 and the second branch switch 17 are arranged, so that the first driving assembly 2 and the second driving assembly 3 are independently connected to the positive electrode of the battery 100; and if one driving assembly fails, the other driving assembly cannot be influenced, thus improving the fault tolerance performance of the whole circuit structure.

In some other embodiments of the present application, in a schematic structural diagram of connection between the charging and discharging circuit 400 and the battery control circuit 9 shown in FIG. 11, the first branch switch 16 is connected to the first positive electrode branch 101, the pre-charge circuit 13 is connected to the second positive electrode branch 102 and is connected in parallel with the first branch switch 16, and the second branch switch 17 is further connected between the pre-charge circuit 13 on the second positive electrode branch 102 and the second positive electrode sub-connector 922. The negative electrode line 11 is provided with the main negative switch 14 and the current sensor 15. The circuit structure on the first positive electrode branch 101 can also be exchanged with the circuit structure on the second positive electrode branch 102.

The pre-charge circuit 13 is arranged on the second positive electrode branch 102, which reserves more space for the negative electrode line 11 so as to arrange other components or conduct wiring in the reserved space. The first branch switch 16 can be controlled to conduct or disconnect the circuit between the battery 100 and the first driving assembly 2, the second branch switch 17 can be controlled to conduct or disconnect the circuit between the battery 100 and the second driving assembly 3; and in a case that the first driving assembly 2 fails, the first branch switch 16 can be controlled to be turned off, thereby protecting the battery 100. In a case that the second driving assembly 3 fails, the second branch switch 17 can be controlled to be turned off, thereby protecting the battery 100. Moreover, the first driving assembly 2 and the second driving assembly 3 are independently connected to the positive electrode, and if one driving assembly fails, the other driving assembly cannot be influenced, thus improving the fault tolerance performance of the whole circuit structure.

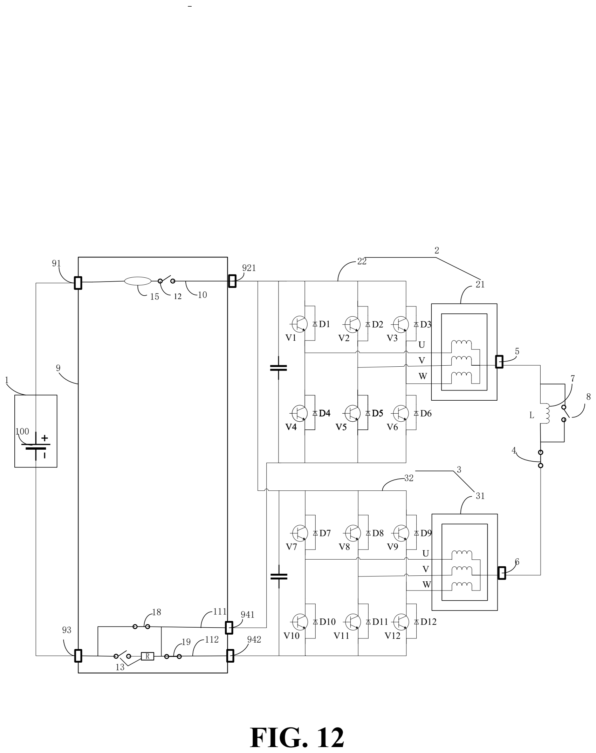

In some embodiments of the present application, in a schematic structural diagram of connection between the charging and discharging circuit 400 and the battery control circuit 9 shown in FIG. 12, the second negative electrode connector 94 includes a first negative electrode sub-connector 941 and a second negative electrode sub-connector 942; and the negative electrode line 11 includes a first negative electrode branch 111 and a second negative electrode branch 112. The first negative electrode branch 111 is connected between the first negative electrode sub-connector 941 and the first negative electrode connector 93, and the second negative electrode branch 112 is connected between the second negative electrode sub-connector 942 and the first negative electrode connector 93. The first negative electrode sub-connector 941 is connected to the second end of the first driving assembly 2, and the second negative electrode sub-connector 942 is connected to the second end of the second driving assembly 3.

In the embodiments, the negative electrode line 11 is divided into the first negative electrode branch 111 and the second negative electrode branch 112, the first negative electrode sub-connector 941 is connected to the second end of the first driving assembly 2, and the second negative electrode sub-connector 942 is connected to the second end of the second driving assembly 3. In this way, the second ends of the first driving assembly 2 and the second driving assembly 3 are connected to different connectors respectively, and it is not needed to bundle the conductor of the second end of the first driving assembly 2 with the conductor of the second end of the second driving assembly 3 so as to be connected to the same connector, thereby improving the convenience of wiring.

Under the condition that the battery control circuit 9 includes the first positive electrode connector 91, the second positive electrode connector 92, the first negative electrode connector 93, the first negative electrode sub-connector 941 and the second negative electrode sub-connector 942, in some embodiments, as shown in FIG. 12, the third branch switch 18 is connected to the first negative electrode branch 111, and the pre-charge circuit 13 is connected to the second negative electrode branch 112 and is connected in parallel with the third branch switch 18; and a fourth branch switch 19 is also connected between the pre-charge circuit 13 on the second negative electrode branch 112 and the second negative electrode sub-connector 942. The main positive electrode line switch 12 and the current sensor 15 are arranged on the positive electrode line 10. The circuit structure on the first negative electrode branch 111 can also be interchanged with the circuit structure on the second negative electrode branch 112.

The pre-charge circuit 13 is arranged on the second negative electrode branch 112, which reserves more space for the positive electrode line 10 so as to arrange other components or conduct wiring in the reserved space. The third branch switch 18 can be controlled to conduct or disconnect the circuit between the battery 100 and the first driving assembly 2, the fourth branch switch 19 can be controlled to conduct or disconnect the circuit between the battery 100 and the second driving assembly 3; and in a case that the first driving assembly 2 fails, the third branch switch 18 can be controlled to be turned off, thereby protecting the battery 100. In a case that the second driving assembly 3 fails, the fourth branch switch 19 can be controlled to be turned off, thereby protecting the battery 100. Moreover, the first driving assembly 2 and the second driving assembly 3 are independently connected to the negative electrode, so if one driving assembly fails, the other driving assembly cannot be influenced, thus improving the fault tolerance performance of the whole circuit structure.

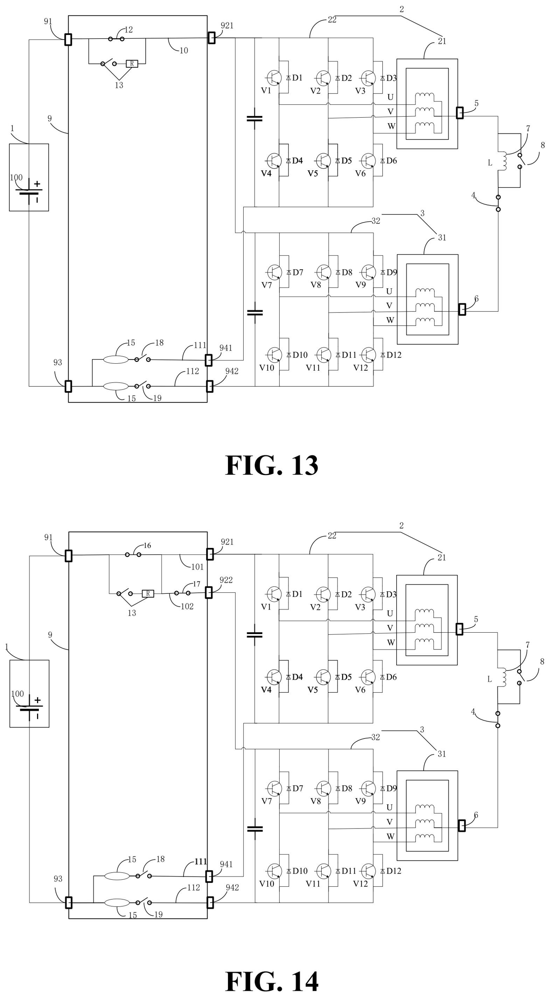

In other embodiments of the present application, in a schematic structural diagram of connection between the charging and discharging circuit 400 and the battery control circuit 9 shown in FIG. 13, the third branch switch 18 and the current sensor 15 are connected to the first negative electrode branch 111, and the fourth branch switch 19 and the current sensor 15 are connected to the second negative electrode branch 112. The positive electrode line 10 is provided with the main positive switch 12 and the pre-charge circuit 13 connected in parallel with the main positive switch 12.

Such arrangement is conducive to reserving more space for the negative electrode line 11 so as to arrange other components or arrange wires in the reserved space. The third branch switch 18 and the fourth branch switch 19 are arranged, so that the first driving assembly 2 and the second driving assembly 3 are independently connected to the positive electrode; and if one driving assembly fails, the other driving assembly cannot be influenced, thus improving the fault tolerance performance of the whole circuit structure.

In some embodiments of the present application, in a schematic structural diagram of connection between the charging and discharging circuit 400 and the battery control circuit 9 shown in FIG. 14, the second positive electrode connector 92 includes the first positive electrode sub-connector 921 and the second positive electrode sub-connector 922; the second negative electrode connector 94 includes the first negative electrode sub-connector 941 and the second negative electrode sub-connector 942; and the first positive electrode branch 101 is connected between the first positive electrode sub-connector 921 and the first positive electrode connector 91, and the second positive electrode branch 102 is connected between the second positive electrode sub-connector 922 and the first positive electrode connector 91. The first negative electrode branch 111 is connected between the first negative electrode sub-connector 941 and the first negative electrode connector 93, and the second negative electrode branch 112 is connected between the second negative electrode sub-connector 942 and the first negative electrode connector 93. The first positive electrode sub-connector 921 is connected to the first end of the first driving assembly 2, and the second positive electrode sub-connector 922 is connected to the first end of the second driving assembly 3. The first negative electrode sub-connector 941 is connected to the second end of the first driving assembly 2, and the second negative electrode sub-connector 942 is connected to the second end of the second driving assembly 3.

In the embodiments, the battery control circuit 9 is provided with six connectors in total, including the first positive electrode connector 91, the first positive electrode sub-connector 921, the second positive electrode sub-connector 922, the first negative electrode connector 93, the first negative electrode sub-connector 941 and the second negative electrode sub-connector 942. The first driving assembly 2 is connected to the battery control circuit 9 by means of the first positive electrode sub-connector 921 and the first negative electrode sub-connector 941 so as to be connected to the battery 100. The second driving assembly 3 is connected to the battery control circuit 9 by means of the second positive electrode sub-connector 922 and the second negative electrode sub-connector 942 so as to be connected to the battery 100. In such connection structure, the first driving assembly 2 and the second driving assembly 3 are equivalently connected to the battery 100 by means of mutually independent circuits. On one hand, the arrangement and connection of the lines in the circuit are in order. On the other hand, if one branch fails, the other branch is not influenced, so that the usability of the electrical device can still be maintained in a case that a certain branch fails, and the fault tolerance of the circuit framework is improved.

In some embodiments, as shown in FIG. 14, the first branch switch 16 is connected to the first positive electrode branch 101, the pre-charge circuit 13 is connected to the second positive electrode branch 102 and is connected in parallel with the first branch switch 16, and the second branch switch 17 is further connected between the pre-charge circuit 13 on the second positive electrode branch 102 and the second positive electrode sub-connector 922. The third branch switch 18 and the current sensor 15 are connected to the first negative electrode branch 111, and the fourth branch switch 19 and the current sensor 15 are connected to the second negative electrode branch 112.

In the embodiments, the pre-charge circuit 13 is arranged on the second positive electrode branch 102, which reserves more space for the negative electrode line 11 so as to arrange other components or conduct wiring in the reserved space. The first branch switch 16 or the third branch switch 18 can be controlled to conduct or disconnect the circuit between the battery 100 and the first driving assembly 2, and the second branch switch 17 or the fourth branch switch 19 can be controlled to conduct or disconnect the circuit between the battery 100 and the second driving assembly 3. In a case that the first driving assembly 2 fails, the first branch switch 16 and/or the third branch switch 18 can be controlled to be turned off, thereby protecting the battery 100. In a case that the second driving assembly 3 fails, the second branch switch 17 and/or the fourth branch switch 19 can be controlled to be turned off, thereby protecting the battery 100. The current sensor 15 on the first negative electrode branch 111 can detect the magnitude of the current in the circuit branch with the first driving assembly 2, and the detected magnitude of the current helps to determine whether the circuit branch with the first driving assembly 2 fails. The current sensor 15 on the second negative electrode branch 112 can detect the magnitude of the current in the circuit branch with the second driving assembly 3, and the detected magnitude of the current helps to determine whether the circuit branch with the second driving assembly 3 fails.

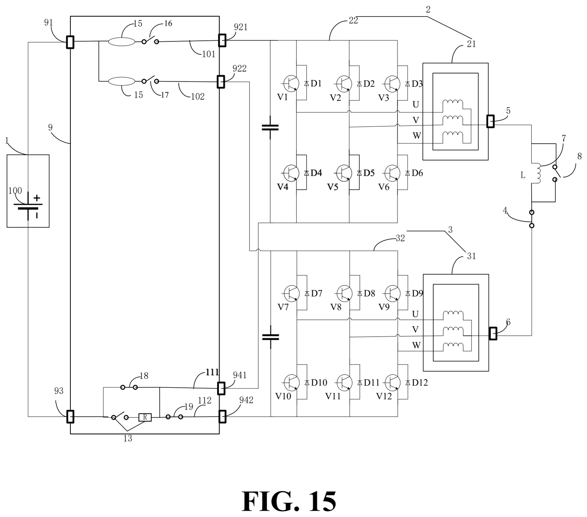

In some other embodiments, in a schematic structural diagram of connection between the charging and discharging circuit 400 and the battery control circuit 9 shown in FIG. 15, the first branch switch 16 and the current sensor 15 are connected to the first positive electrode branch 101, and the second branch switch 17 and the current sensor 15 are connected to the second positive electrode branch 102. The third branch switch 18 is connected to the first negative electrode branch 111, the pre-charge circuit 13 is connected to the second negative electrode branch 112 and is connected to the third branch switch 18 in parallel, and the fourth branch switch 19 is further connected between the pre-charge circuit 13 on the second negative electrode branch 112 and the second negative electrode sub-connector 942.

In the embodiments, the pre-charge circuit 13 is arranged on the second negative electrode branch 112, which reserves more space for the positive electrode line 10 so as to arrange other components or conduct wiring in the reserved space. By means of the circuit structure, the connection relationship of the first driving assembly 2 and the second driving assembly 3 relative to the battery 100 can be conveniently controlled. In a case that the first driving assembly 2 and/or the second driving assembly 3 fail/fails, the connection relationship between the battery 100 and the failed component can be disconnected through switch control, thereby protecting the battery 100.

In some embodiments of the present application, the battery control circuit 9 can be arranged in the form of a battery main control box, the connectors mentioned in each embodiment above can be arranged on an outer surface of the battery main control box, and the positive electrode line 10, the negative electrode line 11 and other lines can be arranged in the battery main control box, so that the line arrangement of the circuit is more orderly.

In the embodiments of the present application, the arrangement position of the pre-charge circuit in the battery control circuit and the arrangement mode of the connectors on the battery control circuit make the component arrangement and wiring of the whole circuit structure more order under the condition that the battery control circuit is connected to the charging and discharging circuit; the first driving assembly and the second driving assembly can be independently connected to different branches, and if the branch with one driving assembly or one driving assembly fails, the other branch or the other driving assembly can run normally to provide kinetic energy for the electrical, so that the running reliability of circuit is improved, and the fault tolerance performance of the whole circuit framework is improved. The connection relationship between the positive electrode and the negative electrode of the battery and other components in the circuit can be flexibly adjusted based on the battery control circuit, so that more different circuit functions can be realized by adjusting the circuit structure.

The above descriptions of the various embodiments tend to emphasize the differences between the various embodiments, and their similarities or similarities can be cross-referenced, and for the sake of brevity, they will not be repeated in this article.

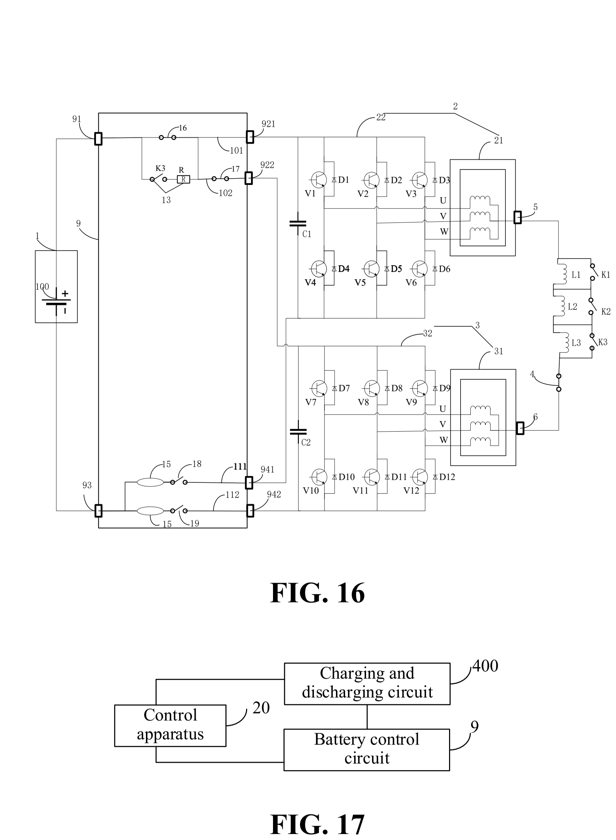

The charging and discharging circuit 400 provided by the embodiment of the present application is described below with a specific embodiment, in a schematic structural diagram of connection between the charging and discharging circuit 400 and the battery control circuit 9 shown in FIG. 16, the charging and discharging circuit 400 includes a battery, a positive electrode end of the battery is connected to the first positive electrode connector 91 of the battery control circuit 9, and a negative electrode end of the battery is connected to the first negative electrode connector 93 of the battery control circuit 9. The battery control circuit 9 is further provided with the first positive electrode sub-connector 921 and the second positive electrode sub-connector 922, and the first branch switch 16 is connected to the first positive electrode branch 101 between the first positive electrode connector 91 and the first positive electrode sub-connector 921. The pre-charge circuit 13 and the second branch switch 17 are connected to the second positive electrode branch 102 between the first positive electrode connector 91 and the second positive electrode sub-connector 922. The pre-charge circuit 13 is connected to the first branch switch 16 in parallel. The pre-charge circuit 13 includes a switch K3 and a resistor R which are connected in series.

The battery control circuit 9 is further provided with the first negative electrode sub-connector 941 and the second negative electrode sub-connector 942, and the third branch switch 18 and the current sensor 15 are connected to the first negative electrode branch 111 between the first negative electrode connector 93 and the first negative electrode sub-connector 941. The fourth branch switch 19 and the current sensor 15 are connected to the second negative electrode branch 112 between the first negative electrode connector 93 and the second negative electrode sub-connector 942.

The first positive electrode sub-connector 921 is connected to a collinear connection point of the upper bridge arm of each bridge arm in the first motor controller 22, and the first negative electrode sub-connector 941 is connected to a collinear connection point of the lower bridge arm of each bridge arm in the first motor controller 22. Each bridge arm in the first motor controller 22 is further connected in parallel with the capacitor C1. In FIG. 16, the first motor controller 22 includes three bridge arms, and the corresponding first motor 21 is provided with three windings. The connection points of the upper and lower bridge arms of the three bridge arms are connected to the three windings in an one-to-one correspondence mode.

The second positive electrode sub-connector 922 is connected to a collinear connection point of the upper bridge arm of each bridge arm in the second motor controller 32, and the second negative electrode sub-connector 942 is connected to a collinear connection point of the lower bridge arm of each bridge arm in the second motor controller 32. Each bridge arm in the second motor controller 32 is further connected in parallel with the capacitor C2. In FIG. 16, the second motor controller 32 includes three bridge arms, and the corresponding second motor 31 is provided with three windings. The connection points of the upper and lower bridge arms of the three bridge arms are connected to the three windings in an one-to-one correspondence mode.

The first neutral line terminal 5 is led out from the neutral point of the first motor 21, and the second neutral line terminal 6 is led out from the neutral point of the second motor 31. The inductors L1, L2 and L3 and the first switch 4 are connected in series between the first neutral line terminal 5 and the second neutral line terminal 6. The inductors L1, L2 and L3 are respectively connected in parallel with the switches K1, K2 and K3.

Taking the electrical device with the charging and discharging circuit 400 being an electric vehicle as an example, in a circuit structure shown in FIG. 16, if the first switch 4 is turned off, the first motor 21 and the second motor 31 are connected in parallel, and the formed circuit loop can drive the electric vehicle to run, and in this case, the electric vehicle can be in a running mode, and can perform normal operation.

When the first switch 4 is turned on, the bridge arms in the first motor controller 22 and the second motor controller 32 can be controlled to be conducted and disconnected, so that the first motor 21 and the second motor 31 are connected in series to form a charging and discharging loop with the battery 100, thereby realizing heating to the battery 100.

As shown in FIG. 16, when the first switch 4 is turned on, the IGBT switch tubes V1, V2 and V3 in the first motor controller 22 and the switch tubes V10, V11 and V12 in the second motor controller 32 are controlled to be conducted, and the V4, V5 and V6 in the first motor controller 22 and the V7, V8 and V9 in the second motor controller 32 are controlled to be disconnected, the current flows through the first motor 21, then flows through the line with the first switch 4, and finally flows through the second motor 31 to reach the negative electrode of the battery 100 to form a discharging loop of the battery. After the battery is discharged for a period of time, the V4, V5 and V6 and the V7, V8 and V9 are controlled to be conducted, and the V1, V2 and V3 and the V10, V11 and V12 are controlled to be disconnected, the current flows through the first motor 21, then flows through the line with the first switch 4, and finally flows through the second motor 31 to reach the positive electrode of the battery 100 so as to form a charging loop of the battery. The discharging loop and the charging loop of the battery can be controlled to realize the pulse heating function, namely, the IGBT switch tube of the first motor 21 is used as the main control switch, and the three-phase windings are used as the three-phase inductors. The IGBT switch tube of the second motor 31 is used as an auxiliary control switch, and the windings are series inductors, so that pulse heating of the battery 100 is realized.

In another mode, when the first switch 4 is turned on, the switch tubes V7, V8 and V9 and the switch tubes V4, V5 and V6 are controlled to be conducted, and the V1, V2 and V3 and the V10, V11 and V12 are controlled to be disconnected, the current flows through the second motor 31, then flows through the line with the first switch 4, and finally flows through the first motor 21 to reach the negative electrode of the battery so as to form the discharging loop of the battery. After the battery is discharged for a period of time, the switch tubes V7, V8 and V9 and the V4, V5 and V6 are controlled to be disconnected, and the V1, V2 and V3 and the V10, V11 and V12 are controlled to be conducted, the current flows through the second motor 31, then flows through the line with the first switch 4, and finally flows through the first motor 21 to reach the positive electrode of the battery so as to form the charging loop of the battery, and therefore, that pulse heating of the battery 100 can also be achieved.

Under the condition that the first switch 4 is turned on, and the IGBT switch tube of the first motor 21 serves as the main control switch, the IGBT switch tube of the second motor 31 serves as the auxiliary control switch, and the upper bridge arms or lower bridge arms of any number of bridge arms in the auxiliary control switch can be controlled to be conducted so as to be matched with the IGBT switch tubes of the first motor 21 to form the charging loop or the discharging loop of the battery. By controlling the conducting and disconnecting of all the bridge arms in the motor controllers of the two motors, various different charging and discharging loops can be formed.

In consideration of space arrangement and the like, a new system framework can be achieved by adjusting the pre-charge circuit 13 arranged at the positive electrode line in FIG. 16 to the negative electrode line.

The structure of the charging and discharging circuit 400 shown in FIG. 16 is only used as one example, and the structure of the charging and discharging circuit 400 in practical application can be the structure provided by any embodiment or the circuit structure formed by combining any embodiment.

In the circuit structure shown in FIG. 16, the neutral lines of the first motor 21 and the second motor 31 are led out, the first switch 4 is connected between neutral points, the connection relationship between the first motor 21 and the second motor 31 can be switched by means of the first switch 4 so as to realize switching to form different circuit loops, and the circuit structure can be flexibly changed to support and achieve more different functions. A plurality of inductors can be connected between the neutral points of the two motors in series, and the inductors can be connected in parallel with the switches, so that the inductance in the charging and discharging loop can be flexibly adjusted, and different battery heating requirements are met by adjusting the circuit structure. Moreover, due to the arrangement position of the pre-charge circuit 13 in the battery control circuit 9 and the arrangement mode of the connector on the battery control circuit 9, the component arrangement and wiring of the whole circuit structure are more order, the fault-tolerant performance of the whole circuit structure is better, and the safety of the circuit is improved.

The above descriptions of the various embodiments tend to emphasize the differences between the various embodiments, and their similarities or similarities can be cross-referenced, and for the sake of brevity, they will not be repeated in this article.

Some embodiments of the present application also provide an electrical device. As shown in FIG. 17, the electrical device includes the control apparatus 20, the charging and discharging circuit 400 provided by any one of the embodiments, and the battery control circuit 9 provided by any one of the embodiments; and the battery control circuit 9 is connected to the charging and discharging circuit 400. The control apparatus 20 is in communication connection with the charging and discharging circuit 400 and a switch element in the battery control circuit 9; and the switch element includes at least the first switch 4 which is connected between the neutral point of the first motor 21 and the neutral point of the second motor 31.

The switch element can also include each switch arranged in the battery control circuit 9 or switches in each bridge arm of the first motor controller 22 and the second motor controller 32. The control device 20 can be a motor controller, a vehicle control unit or a domain controller and the like. The electrical device can be any device including a single battery and double motors, such as an electric vehicle, an electric ship or an aircraft.

Through automatic control of the control device 20 on the switch element in the charging and discharging circuit 400, flexible switching between different circuit loops is realized by turning off or turning on the switch element, so that more functions can be realized, the flexibility and fault tolerance of charging and discharging circuit control are improved, the functions which can be realized by the whole circuit framework are increased, and the performance of the electrical device is improved.

The above descriptions of the various embodiments tend to emphasize the differences between the various embodiments, and their similarities or similarities can be cross-referenced, and for the sake of brevity, they will not be repeated in this article.

It is to be noted that:
the term "module" is not intended to be limited to a particular physical form. Depending on the specific application, modules may be implemented as hardware, firmware, software, and/or combinations thereof. In addition, different modules may share common components or even be implemented by the same components. Clear boundaries between different modules may or may not exist.

The algorithms and displays provided herein are not inherently associated with any particular computer, virtual apparatus, or other device. Various generic devices may also be used with the examples based herein. The structure required to construct such devices is obvious in light of the above description. Furthermore, the present application is not directed to any particular programming language. It should be understood that a variety of programming languages may be utilized to implement the contents of the present application as described herein, and that the description above of particular languages is intended to disclose the best implementations of the present application.

It should be understood that although the individual steps in the flowcharts of the accompanying drawings are shown sequentially as indicated by the arrows, these steps are not necessarily performed sequentially in the order indicated by the arrows. Unless explicitly stated herein, these steps are performed in no strict order, and they can be performed in any other order. Moreover, at least a part of the steps in the flowchart of the accompanying drawings may include a plurality of sub-steps or a plurality of stages, and these sub-steps or stages are not necessarily executed at the same time, but can be executed at different times, and the order of execution is not necessarily sequential, but may be executed alternately or alternately with at least a part of the sub-steps or stages of other steps or other steps.

The above embodiments only express the embodiment of the present application, and its description is more specific and detailed, but it cannot be understood as a limitation on the scope of the patent of the present application. It is to be noted that, for a person of ordinary skill in the art, a number of variations and improvements can be made without departing from the conception of the present application, which fall within the scope of protection of the present application. Therefore, the scope of protection of the present application shall be subject to the attached claims.

## Claims

1. A charging and discharging circuit, comprising: a power supply module, a first driving assembly, a second driving assembly and a first switch, wherein the power supply module comprises a battery, the first driving assembly comprises a first motor, and the second driving assembly comprises a second motor;
the first driving assembly and the second driving assembly are connected in parallel between a positive electrode end and a negative electrode end of the power supply module;
one end of the first switch is connected to a neutral point of the first motor, and the other end of the first switch is connected to a neutral point of the second motor;
the neutral point of the first motor is provided with a first neutral line terminal, and the neutral point of the second motor is provided with a second neutral line terminal; and
one end of the first switch is connected to the first neutral line terminal by means of a high-voltage wire harness, and the other end of the first switch is connected to the second neutral line terminal by means of the high-voltage wire harness.

2. The charging and discharging circuit according to claim 1, further comprising an energy storage element, wherein
the energy storage element is connected to a line between the neutral point of the first motor and the neutral point of the second motor, and is connected to the first switch in series.

3. The charging and discharging circuit according to claim 2, wherein the energy storage element comprises at least one inductor; and
the at least one inductor and the first switch are connected in series with a line between the neutral point of the first motor and the neutral point of the second motor.

4. The charging and discharging circuit according to claim 3, further comprising at least one second switch which is connected in parallel with the at least one inductor.

5. The charging and discharging circuit according to claim 4, wherein the second switches are in one-to-one correspondence with the inductors, and each second switch is connected in parallel with the corresponding inductor.

6. A battery control circuit, comprising a first positive electrode connector, a second positive electrode connector, a first negative electrode connector and a second negative electrode connector, wherein
a positive electrode line is connected between the first positive electrode connector and the second positive electrode connector, and a negative electrode line is connected between the first negative electrode connector and the second negative electrode connector;
the first positive electrode connector is connected to a positive electrode end of the battery in the charging and discharging circuit according to any one of claims 1 to 5, and the first negative electrode connector is connected to a negative electrode end of the battery;
the second positive electrode connector is connected to a first end of the first driving assembly and a first end of the second driving assembly in the charging and discharging circuit; and
the second negative electrode connector is connected to a second end of the first driving assembly and a second end of the second driving assembly.

7. The battery control circuit according to claim 6, wherein
a main positive switch and a pre-charge circuit connected in parallel with the main positive switch are arranged on the positive electrode line; and
the main negative switch and the current sensor are arranged on the negative electrode line.

8. The battery control circuit according to claim 6, wherein
the main positive switch and the current sensor are arranged on the positive electrode line; and
the main negative switch and the pre-charge circuit connected in parallel with the main negative switch are arranged on the negative electrode line.

9. The battery control circuit according to any one of claims 6 to 8, wherein the second positive electrode connector comprises a first positive electrode sub-connector and a second positive electrode sub-connector; the positive electrode line comprises a first positive electrode branch and a second positive electrode branch;
the first positive electrode branch is connected between the first positive electrode sub-connector and the first positive electrode connector, and the second positive electrode branch is connected between the second positive electrode sub-connector and the first positive electrode connector; and
the first positive electrode sub-connector is connected to the first end of the first driving assembly, and the second positive electrode sub-connector is connected to the first end of the second driving assembly.

10. The battery control circuit according to claim 9, wherein
a first branch switch is connected to the first positive electrode branch, the pre-charge circuit is connected to the second positive electrode branch and is connected in parallel with the first branch switch; a second branch switch is also connected between the pre-charge circuit on the second positive electrode branch and the second positive electrode sub-connector; and
the main negative switch and the current sensor are arranged on the negative electrode line.

11. The battery control circuit according to claim 9, wherein
the first branch switch and the current sensor are connected to the first positive electrode branch, and the second branch switch and the current sensor are connected to the second positive electrode branch; and
the main negative switch and the pre-charge circuit connected in parallel with the main negative switch are arranged on the negative electrode line.

12. The battery control circuit according to any one of claims 6 to 11, wherein the second negative electrode connector comprises a first negative electrode sub-connector and a second negative electrode sub-connector; the negative electrode line comprises a first negative electrode branch and a second negative electrode branch;
the first negative electrode branch is connected between the first negative electrode sub-connector and the first negative electrode connector; the second negative electrode branch is connected between the second negative electrode sub-connector and the first negative electrode connector; and
the first negative electrode sub-connector is connected to the second end of the first driving assembly, and the second negative electrode sub-connector is connected to the second end of the second driving assembly.

13. The battery control circuit according to claim 12, wherein
a third branch switch is connected to the first negative electrode branch, and the pre-charge circuit is connected to the second negative electrode branch and is connected to the third branch switch in parallel; and
the positive electrode line is provided with the main positive switch and the current sensor.

14. The battery control circuit according to claim 12, wherein
the third branch switch and the current sensor are connected to the first negative electrode branch, and a fourth branch switch and the current sensor are connected to the second negative electrode branch; and
the positive electrode line is provided with the main positive switch and the pre-charge circuit connected in parallel with the main positive switch.

15. The battery control circuit according to any one of claims 6 to 14, wherein the second positive electrode connector comprises the first positive electrode sub-connector and the second positive electrode sub-connector; the second negative electrode connector comprises the first negative electrode sub-connector and the second negative electrode sub-connector;
the first positive electrode branch is connected between the first positive electrode sub-connector and the first positive electrode connector, and the second positive electrode branch is connected between the second positive electrode sub-connector and the first positive electrode connector;
the first negative electrode branch is connected between the first negative electrode sub-connector and the first negative electrode connector, and the second negative electrode branch is connected between the second negative electrode sub-connector and the first negative electrode connector;
the first positive electrode sub-connector is connected to the first end of the first driving assembly, and the second positive electrode sub-connector is connected to the first end of the second driving assembly; and
the first negative electrode sub-connector is connected to the second end of the first driving assembly, and the second negative electrode sub-connector is connected to the second end of the second driving assembly.

16. The battery control circuit according to claim 15, wherein
the first branch switch is connected to the first positive electrode branch, and the pre-charge circuit is connected to the second positive electrode branch and is connected in parallel with the first branch switch; and
the third branch switch and the current sensor are connected to the first negative electrode branch, and the fourth branch switch and the current sensor are connected to the second negative electrode branch.

17. The battery control circuit according to claim 16, wherein
the first branch switch and the current sensor are connected to the first positive electrode branch, and the second branch switch and the current sensor are connected to the second positive electrode branch; and
the third branch switch is connected to the first negative electrode branch, and the pre-charge circuit is connected to the second negative electrode branch and is connected in parallel with the third branch switch.

18. An electrical device, comprising a control apparatus, the charging and discharging circuit according to any one of claims 1 to 5, and the battery control circuit according to any one of claims 6 to 17, wherein
the charging and discharging circuit is connected to the battery control circuit; and
the control apparatus is in communication connection with the charging and discharging circuit and a switch element in the battery control circuit, and the switch element comprises at least the first switch in the charging and discharging circuit.
